# EUROPEAN PATENT SPECIFICATION

(11) **EP 2 653 331 B1**
(45) Date of publication and mention of the grant of the patent: **30.09.2015**
(21) Application number: 13162965.1
(22) Date of filing: 09.04.2013
(51) Int. Cl.: B60J 5/04, B60J 5/10

(54) **Resin vehicle door structure**
Harzstruktur für eine Fahrzeugtür
Structure de porte de véhicule en résine

(30) Priority: 17.04.2012 JP 2012093964
(43) Date of publication of application: 23.10.2013
(73) Proprietor: TOYOTA JIDOSHA KABUSHIKI KAISHA, Toyota-shi, Aichi-ken, 471-8571 (JP)
(72) Inventor: Hamasaki, Hitoshi, Toyota-shi, Aichi-ken, 471-8571 (JP); Demizu, Hiroaki, Kanagawa, 237-8585 (JP)
(74) Representative: Kuhnen & Wacker

(56) References cited:
- FR-A1- 2 965 241
- JP-A- 2011 136 606

## Description

### BACKGROUND

### Technical Field

The present invention relates to a resin vehicle door structure accoding to the preamble of the claim 1.

### Related Art

Japanese Patent Application Laid-Open (JP-A) No. 2011-136606 discloses a resin back door structure in which a resin inner panel and outer panel are adhered together using an adhesive such as urethane.

However, in the resin back door structure of JP-A No. 2011-136606, when for example recessed portions heavily indented towards the vehicle inside are present on faces of the inner panel that are coated with adhesive, there is a possibility of the adhesive not reaching bottom portions of the recessed portions when the adhesive is coated. Consequently breaks in the adhesive can occur at the side in front of the bottom portions of the recessed portions when join faces of the outer panel are overlaid with the recessed portions of the inner panel, with this being a cause of seal breaks.

### SUMMARY

In consideration of the above circumstances, the present invention provides a resin vehicle door structure capable of preventing or suppressing the occurrence of seal breaks caused by insufficient adhesive filling when adhering an outer panel and an inner panel together with an adhesive.

A resin vehicle door structure of a first aspect of the present invention includes: an outer panel disposed at a vehicle compartment outer side of a vehicle door; an inner panel made from resin and disposed at a vehicle compartment inner side of the outer panel; a bent portion that is a portion of the resin vehicle door structure which is formed by the outer panel and the inner panel and that is provided at a join portion where the outer panel and the inner panel are joined to each other by an adhesive, whereby the outer panel and the inner panel are bent into a crank shape when forming the bent portion; and a rib that is formed at least at a corner portion of the bent portion on a face of one of the outer panel and the inner panel that is coated with the adhesive, and that projects out from said face of the corner portion.

According to the first aspect of the present invention, the bent portion is provided at the join portion where the outer panel and the resin inner panel are joined together by an adhesive, and the bent portion is bent, from panel faces of the outer panel and the inner panel, into a crank shape. The rib is formed at least at the corner portion of the bent portion on a face of one of the outer panel and the inner panel that is coated with the adhesive, and projects out from the face of the corner portion. When the adhesive is coated onto one out of an outer panel join portion or an inner panel join portion, and the outer panel join portion and the inner panel join portion are relatively pressed against each other and joined, the rib bites into (indents) the adhesive due to the rib formed at least at the corner portion of the bent portion on a face of one of the outer panel and the inner panel that is coated with the adhesive. Occurrence of seal breaks caused by insufficient filling of adhesive at the corner portion on the bent portion can accordingly be prevented or suppressed.

A resin vehicle door structure of a second aspect of the present invention is the first aspect of the present invention wherein at least a portion of the rib is formed at a face of the bent portion, the bent portion being disposed along a direction in which the portion of the outer panel and the portion of the inner panel, which form the joint portion, are relatively pressed against each other.

According to the second aspect of the present invention, at least a portion of the rib is formed at the face of the bent portion that is disposed along a direction in which the portion of the outer panel and the portion of the inner panel, which form the joint portion, are relatively pressed against each other. When one out of the portion of the outer panel or the portion of the inner panel, which form the joint portion, is moved in a pressing together direction of the portions, the adhesive coated on the face of the bent portion that is disposed along the pressing together direction is liable to be scraped away by the portion of the other panel. However due to forming the rib at the face of the bent portion, the rib bites into (indents) the adhesive. The bent portion of the outer panel and the inner panel can accordingly be reliably sealed.

A resin vehicle door structure of a third aspect of the present invention is either the first aspect or the second aspect of the present invention wherein the adhesive coats a portion of the inner panel at the bent portion; and the corner portion on the face of one of the outer panel and the inner panel that is coated with the adhesive configures a recess shaped portion where the inner panel is recessed towards the vehicle compartment inner side.

According to the third aspect of the present invention, the corner portion on the face of one of the outer panel and the inner panel that is coated with the adhesive configures the recess shaped portion where the inner panel is recessed towards the vehicle compartment inner side, and the adhesive coats the portion of the inner panel. The rib formed to at least the corner portion on the face of one of the outer panel and the inner panel of the bent portion that is coated with the adhesive accordingly bites into (indents) the adhesive when the portion of the outer panel is pressed against and joined to the portion of the inner panel. The occurrence of seal breaks caused by insufficient filling of the adhesive at the corner portion on the face of one of the outer panel and the inner panel of the bent portion can accordingly be prevented or suppressed.

### BRIEF DESCRIPTION OF THE DRAWINGS

Exemplary Embodiments of the present invention will be described in detail based on the following figures, wherein:
Fig. 1 is a back face drawing illustrating a resin back door applied with a resin vehicle door structure according to a first exemplary embodiment;
Fig. 2 is an exploded perspective view illustrating the resin back door shown in Fig. 1 in a state with a rear window glass removed;
Fig. 3 is a perspective view illustrating resin coated portions of an inner panel to which an upper outer and a lower outer illustrated in Fig. 2 are joined;
Fig. 4 is a cross-section illustrating resin coated portions of an inner panel to which the upper outer and the lower outer illustrated in Fig. 2 are joined;
Fig. 5 is a back face view of an inner panel illustrated in Fig. 2 on its own;
Fig. 6 is a perspective view illustrating a bent portion formed at a vehicle width direction outside upper portion join portion of an inner panel;
Fig. 7 is a cross-section illustrating a join portion of an inner panel to an outer panel taken along line 2-2 in Fig. 6;
Fig. 8 is a cross-section illustrating a join portion of an inner panel to an outer panel taken along line 3-3 in Fig. 7;
Fig. 9 is a perspective view illustrating a bent portion formed at a vehicle width direction outside vehicle up-down direction intermediate portion join portion of an inner panel;
Fig. 10 is a cross-section illustrating a join portion of an inner panel to an outer panel taken along line 4-4 in Fig. 9;
Fig. 11 is a cross-section illustrating a join portion of an inner panel to an outer panel taken along line 5-5 in Fig. 10;
Fig. 12 is perspective view illustrating a bent portion formed at a vehicle width direction central portion vehicle lower portion side join portion of an inner panel;
Fig. 13 is a cross-section illustrating a join portion of an inner panel to an outer panel taken along line 6-6 of Fig. 12;
Fig. 14 is an enlarged cross-section illustrating the vicinity of a bent portion of the inner panel illustrated in Fig. 13, in a state prior to joining to the outer panel;
Fig. 15A is a cross-section illustrating a state wherein an outer panel is being joined to a bent portion at a vehicle width direction outside upper portion of an inner panel of a comparative example;
Fig. 15B is a cross-section illustrating a state wherein an outer panel is being joined to a bent portion at a vehicle width direction outside vehicle up-down direction intermediate portion of an inner panel of a comparative example;
Fig. 15C is a cross-section illustrating a state wherein an outer panel is being joined to a bent portion at a vehicle width direction central portion vehicle lower portion side of an inner panel of a comparative example;
Fig. 16A is a cross-section illustrating a process of joining an outer panel to a bent portion at a vehicle width direction outside vehicle up-down direction intermediate portion of an inner panel of a comparative example; and
Fig. 16B is a cross-section illustrating a process of joining an outer panel to a bent portion at a vehicle width direction outside vehicle up-down direction intermediate portion of an inner panel of a comparative example.

### DETAILED DESCRIPTION

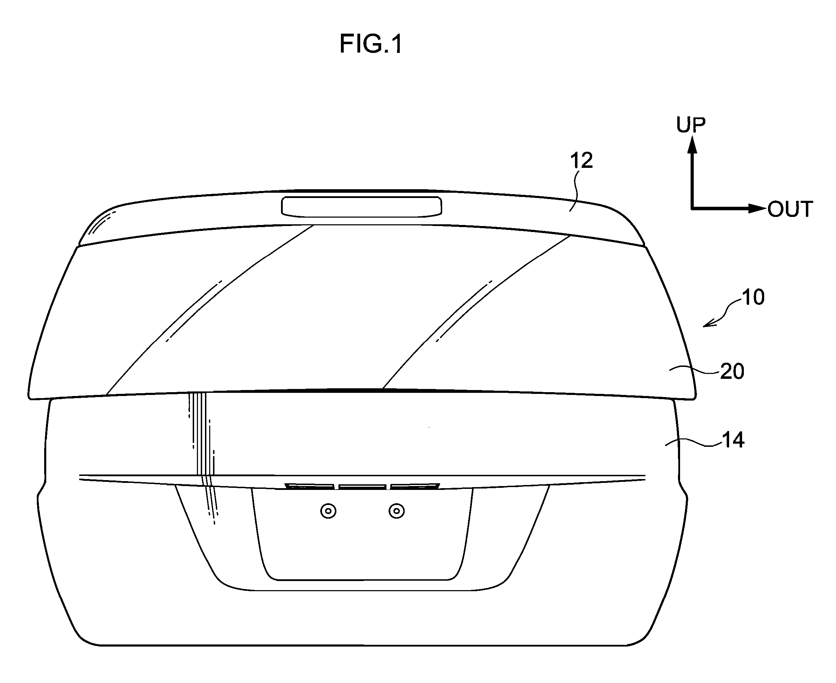

Explanation follows regarding a first exemplary embodiment of a resin vehicle door structure according to the present invention, with reference to Fig. 1 to Fig. 14. Note that in the drawings, the arrow RR indicates the vehicle rear side, the arrow UP indicates the vehicle upper side, and the arrow OUT indicates the vehicle width direction outside, as appropriate.

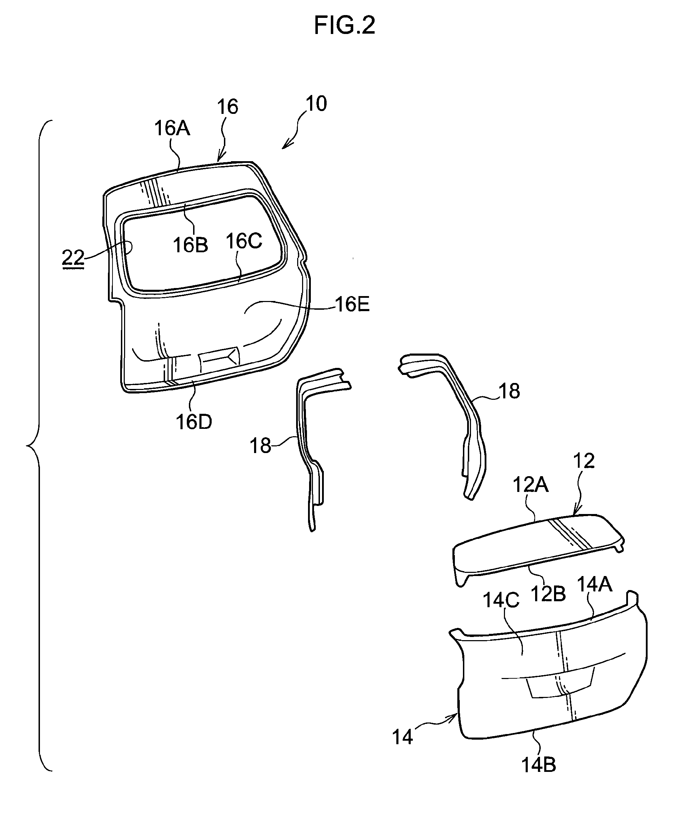

Fig. 1 shows a back door 10 applied with a resin vehicle back door structure as an example of a resin vehicle door structure. Fig. 2 is an exploded perspective view of the back door 10 of Fig. 1 in a state with a rear window glass removed. A substantially rectangular back door opening portion (not shown in the drawings) is provided to a rear end section of a vehicle body (not shown in the drawings), and the back door opening portion is opened and closed by the back door 10 illustrated in Fig. 1. An upper end portion of the back door 10 is supported by the vehicle body rear end section on hinges (not shown in the drawings) such that the back door 10 can be opened and closed.

As shown in Fig. 1 and Fig. 2, the back door 10 includes an upper outer 12 as an example of an outer panel disposed at an upper portion side to the outside of the vehicle compartment, a lower outer 14 as an example of an outer panel disposed at a lower portion side to the outside of the vehicle compartment, and an inner panel 16 that is made from resin and is disposed at the vehicle compartment inner side of the upper outer 12 and the lower outer 14. In other words, the upper outer 12 is disposed at the vehicle front-rear direction rear side of an upper portion side of the inner panel 16, and the lower outer 14 is disposed at the vehicle front-rear direction rear side of a lower portion side of the inner panel 16. In the present exemplary embodiment, the upper outer 12 and the lower outer 14 are formed from resin panels.

As shown in Fig. 2, hinge reinforcements 18 made from metal (for example sheet steel) are provided running along the vehicle up-down direction between the upper outer 12 and lower outer 14 and the inner panel 16 at both vehicle width direction sides of the back door 10. The hinge reinforcements 18 are formed substantially in inverted L shapes as viewed in a rear elevation of the vehicle, and are disposed with left-right symmetry to each other. Hinges (not shown in the drawings) that support the back door 10 on the rear end section of the vehicle body (not shown in the drawings) such that the back door 10 can be opened and closed are attached to upper portions of the hinge reinforcements 18. The hinge reinforcements 18 are fastened and fixed the inner panel 16 by fasteners, not shown in the drawings.

An opening portion 22 is provided to an upper portion side of the inner panel 16. A rear window glass 20 (see Fig. 1) is attached to the back door 10 so as to cover the opening portion 22.

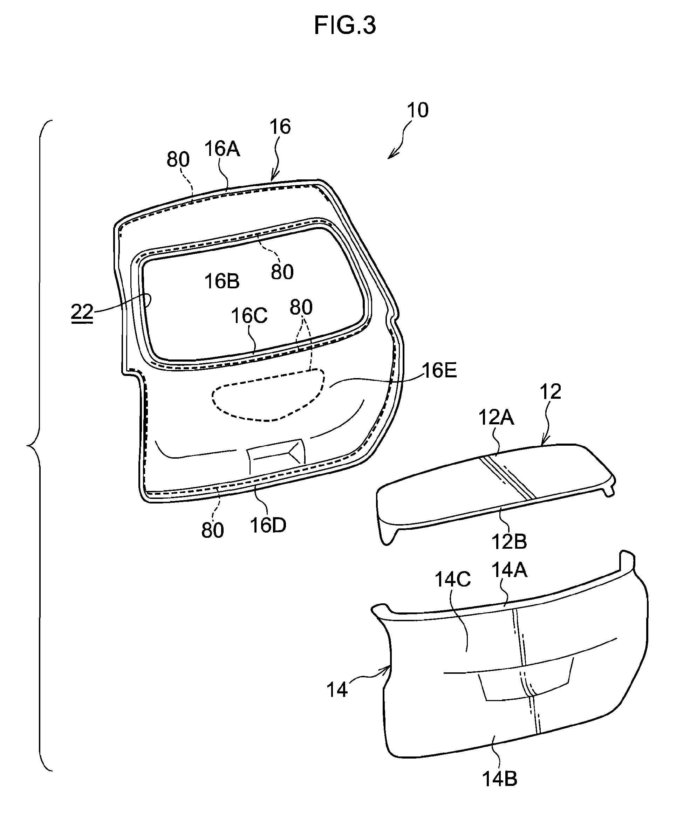

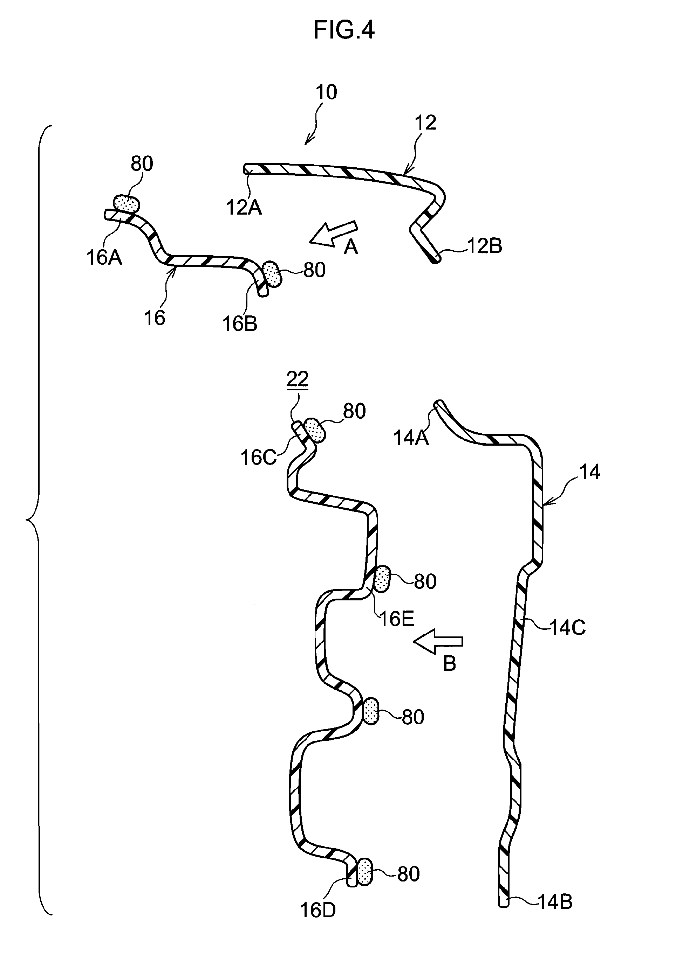

As shown in Fig. 3 and Fig. 4, join portions between the inner panel 16 and the upper outer 12 and join portions between the inner panel 16 and the lower outer 14 are joined by an adhesive 80 such as a polyurethane. More specifically, the adhesive 80 is coated along an upper end peripheral edge portion (join portion) 16A of the inner panel 16, and the adhesive 80 is also coated along an upper edge portion (join portion) 16B of the opening portion 22 of the inner panel 16. In this state, an upper end peripheral edge portion (join portion) 12A and a lower end peripheral edge portion (join portion) 12B of the upper outer 12 are respectively joined by the adhesive 80 to the upper end peripheral edge portion 16A of the inner panel 16 and the upper edge portion 16B of the opening portion 22 of the inner panel 16 by setting (pressing) the upper outer 12 to the inner panel 16 in the downwards diagonal direction indicated by arrow A.

The adhesive 80 is also coated along a lower edge portion (join portion) 16C of the opening portion 22 of the inner panel 16, coated along a lower side peripheral edge portion (join portion) 16D of the inner panel 16, and coated in a loop pattern at a vehicle width direction central portion (join portion) 16E of the inner panel 16. In this state, an upper end portion (join portion) 14A, a lower side peripheral edge portion (join portion) 14B and a central portion (join portion) 14C of the lower outer 14 are respectively joined by the adhesive 80 to the lower edge portion 16C of the opening portion 22 of the inner panel 16, and the lower side peripheral edge portion 16D and the central portion 16E of the inner panel 16 by setting (pressing) the lower outer 14 to the inner panel 16 in the horizontal direction indicated by arrow B.

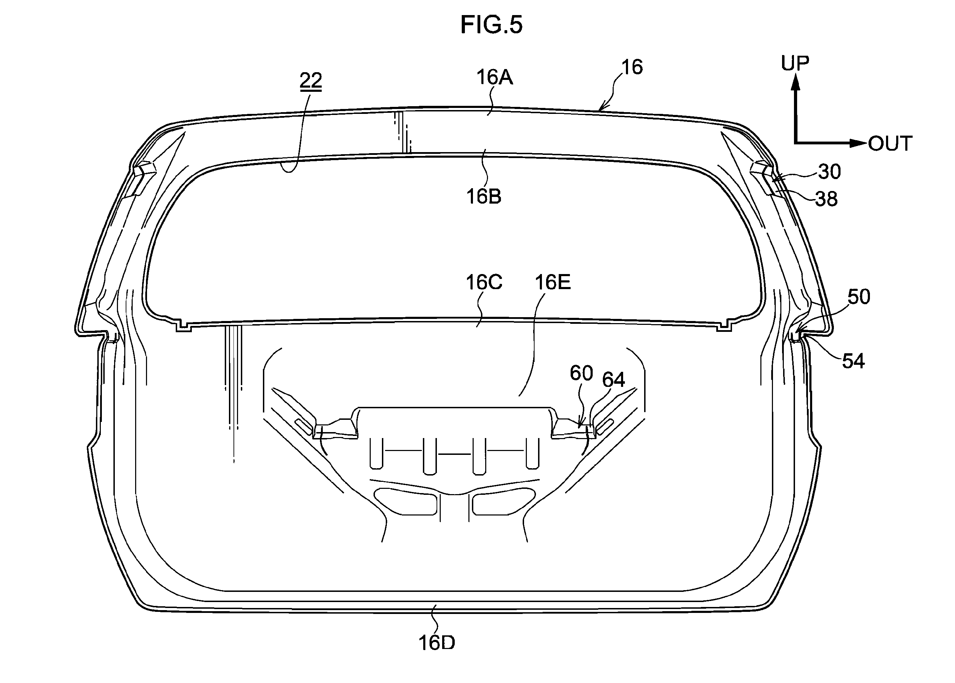

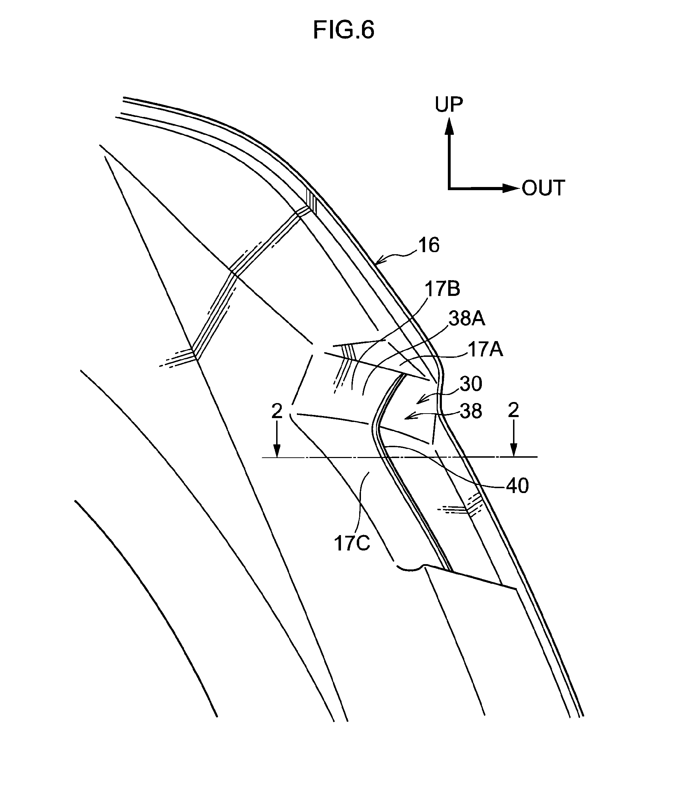

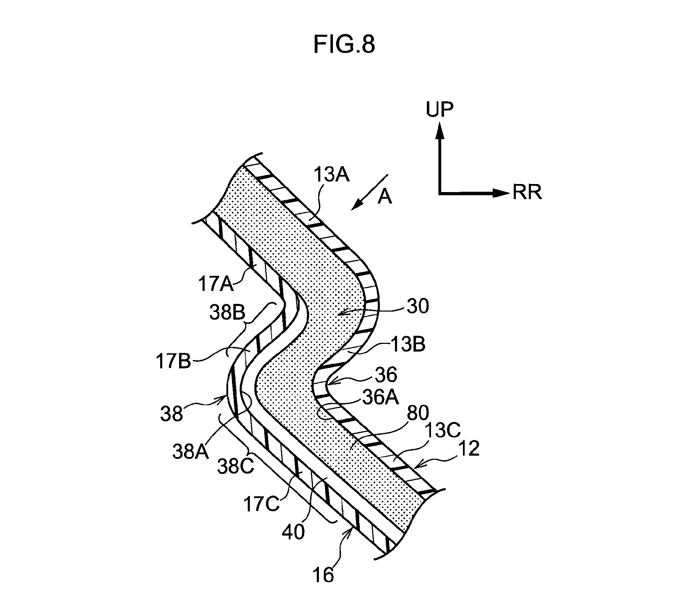

Fig. 6 to Fig. 8 show a join portion 30 between the upper outer 12 and the inner panel 16 at a vehicle width direction outside upper portion of the back door 10 (see Fig. 5). As shown in Fig. 5, Fig. 6 and Fig. 8, bent portions 36, 38 are formed at the join portion 30 between the upper outer 12 and the inner panel 16 at the vehicle width direction outside upper portion of the back door 10 so as to bend in a crank shape from vehicle outside (upper side) panel faces 13A, 17A of the upper outer 12 and the inner panel 16 towards the vehicle inside. More specifically, as viewed from the side of the vehicle, the bent portion 36 of the upper outer 12 is provided with a wall portion 13B that extends from the upper side panel face 13A diagonally towards the vehicle front direction lower side, and a panel face 13C that extends from a lower end of the wall portion 13B diagonally towards the vehicle rear direction lower side. Namely, as viewed from the side of the vehicle, in the bent portion 36 of the upper outer 12, the wall portion 13B and the bottom portion panel face 13C form a protrusion shaped face 36A that protrudes so as to curve in a protrusion shape towards the vehicle inside (vehicle front side) (see Fig. 8).

As viewed from the side of the vehicle, the bent portion 38 of the inner panel 16 is provided with a wall portion 17B that extends from an upper portion side panel face 17A diagonally towards the vehicle front direction lower side, and a bottom portion panel face 17C that extends diagonally towards the vehicle rear direction lower side from a lower end of the wall portion 17B. Namely, as viewed from the side of the vehicle, in the bent portion 38 of the inner panel 16, the wall portion 17B and the panel face 17C form a recess shaped face (recess shaped portion) 38A serving as a corner portion (a bottom portion panel face 17C side corner portion) that is recessed so as to curve in a recess shape towards the vehicle inside (the vehicle front side). The recess shaped face 38A is formed in a shape conforming to the shape of the protrusion shaped face 36A.

In the present exemplary embodiment, the adhesive 80 coats the join portions of the inner panel 16. As shown in Fig. 6 to Fig. 8, a rib 40 that projects out in a substantially orthogonal direction from the recess shaped face 38A is formed at the recess shaped face 38A of the bent portion 38 to which the adhesive 80 is coated. The rib 40 is formed projecting out towards the vehicle outside from the recess shaped face 38A and spanning across the corner portion of the recess shaped face 38A in a substantially vehicle up-down direction.

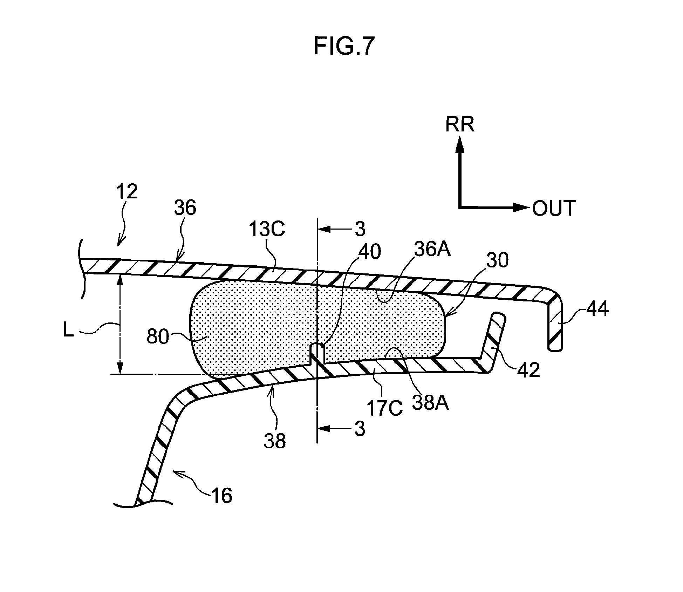

As shown in Fig. 7, an inflected portion 42 that is inflected towards the upper outer 12 is formed at a vehicle width direction outside end portion of the inner panel 16. The height (vehicle front-rear direction length) of the inflected portion 42 with respect to the panel face of the inner panel 16 is set lower (the front-rear direction length is set shorter) than the thickness of the adhesive 80 that joins the inner panel 16 and the upper outer 12. Moreover, a vehicle width direction outside end portion of the upper outer 12 extends further towards the outside than the vehicle width direction outside end portion of the inner panel 16. The vehicle width direction outside end portion of the upper outer 12 is formed with an inflected portion 44 that is inflected towards the inner panel 16 side along the inflected portion 42 of the inner panel 16.

As shown in Fig. 7, a separation (distance between faces) L between the recess shaped face 38A of the inner panel 16 and the protrusion shaped face 36A of the upper outer 12 at the vehicle width direction inside is configured wider than the separation (distance between faces) between the recess shaped face 38A of the inner panel 16 and the protrusion shaped face 36A of the upper outer 12 at the vehicle width direction outside. In the present exemplary embodiment, the separation (distance between faces) L between the recess shaped face 38A of the inner panel 16 and the protrusion shaped face 36A of the upper outer 12 is set so as to gradually widen on progression from the vehicle width direction outside towards the vehicle width direction inside. Namely, the recess shaped face 38A of the inner panel 16 is angled such that, in a plan view of the vehicle, the vehicle width direction inside of the recess shaped face 38A is disposed further to the vehicle front side than the vehicle width direction outside of the recess shaped face 38A.

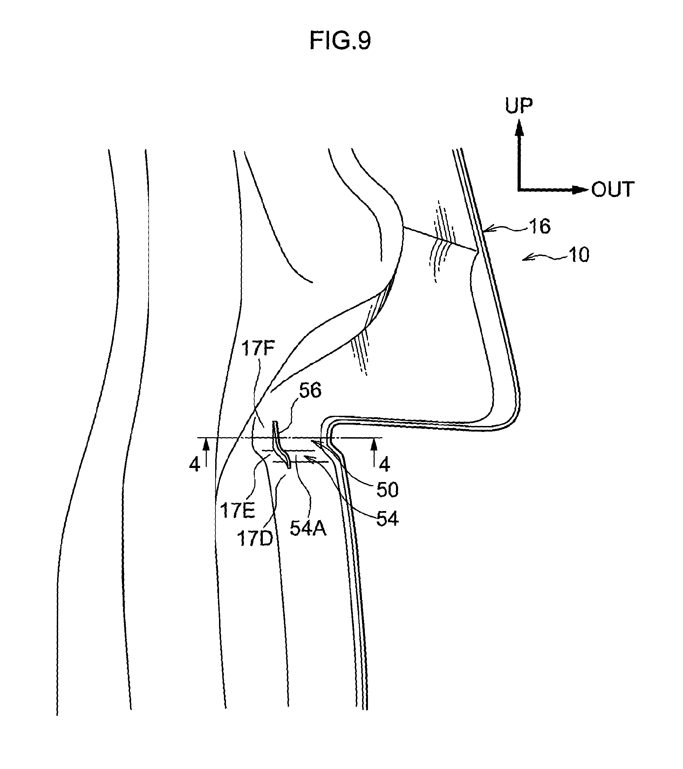

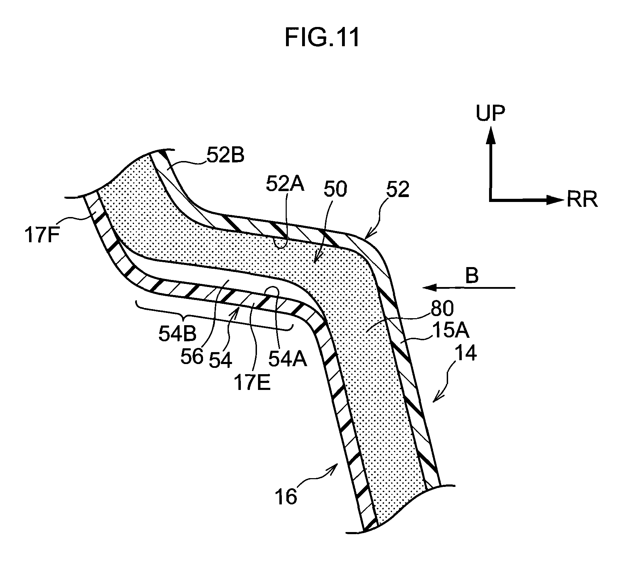

Fig. 9 to Fig. 11 show a join portion 50 between the lower outer 14 and the inner panel 16 at a vehicle up-down direction intermediate portion on the vehicle width direction outside of the back door 10 (see Fig. 5). As shown in Fig. 5, Fig. 9 and Fig. 11, bent portions 52, 54 are formed at the join portion 50 of the lower outer 14 and the inner panel 16 so as to bend in a crank shape towards the vehicle inside from vehicle outside (lower portion side) panel faces 15A, 17D of the lower outer 14 and the inner panel 16. More specifically, as viewed from the side of the vehicle, the bent portion 52 of the lower outer 14 includes a protruding face 52A that protrudes towards the vehicle inside (vehicle front side) so as to be inflected from an upper end of the lower portion side panel face 15A, and a panel face 52B that extends from a front end of the protruding face 52A towards the upper side (see Fig. 11).

As viewed from the side of the vehicle, the bent portion 54 of the inner panel 16 includes a wall portion 17E that is inflected from an upper end of a lower portion side panel face 17D towards the vehicle inside (vehicle front side), and a bottom portion panel face 17F that extends from a front end of the wall portion 17E towards the upper side. Namely, as viewed from the side of the vehicle, the wall portion 17E and the panel face 17F form a recess shaped face (recess shaped portion) 54A serving as a corner portion (a bottom portion panel face 17F side corner portion) recessed so as to curve in a recess shape towards the vehicle inside (vehicle front side) at the bent portion 54 of the inner panel 16. The recess shaped face 54A is formed in a shape conforming to the shape of the protruding face 52A and the panel face 52B.

As shown in Fig. 9 to Fig. 11, a rib 56 that projects out in a substantially orthogonal direction from the recess shaped face 54A is formed at the recess shaped face 54A of the bent portion 54 to which the adhesive 80 is coated. The rib 56 is formed projecting out towards the vehicle outside from the recess shaped face 54A and running along the vehicle front-rear direction on the wall portion 17E from the vicinity of the corner portion of the recess shaped face 54A.

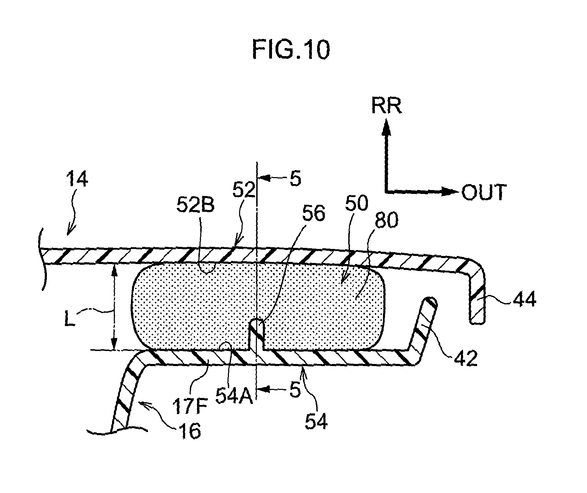

As shown in Fig. 10, a separation (distance between faces) L between the recess shaped face 54A of the inner panel 16 and the protruding face 52A or the panel face 52B of the lower outer 14 is configured wider than the separation between join faces of the inner panel and join faces of the lower outer at general locations (locations other than at the bent portions). For example, the separation (distance between faces) L between the recess shaped face 54A of the inner panel 16 and the protruding face 52A of the lower outer 14 is set at around 5mm for a separation of around 3mm between join faces of the inner panel 16 and join faces of the lower outer 14 at general locations.

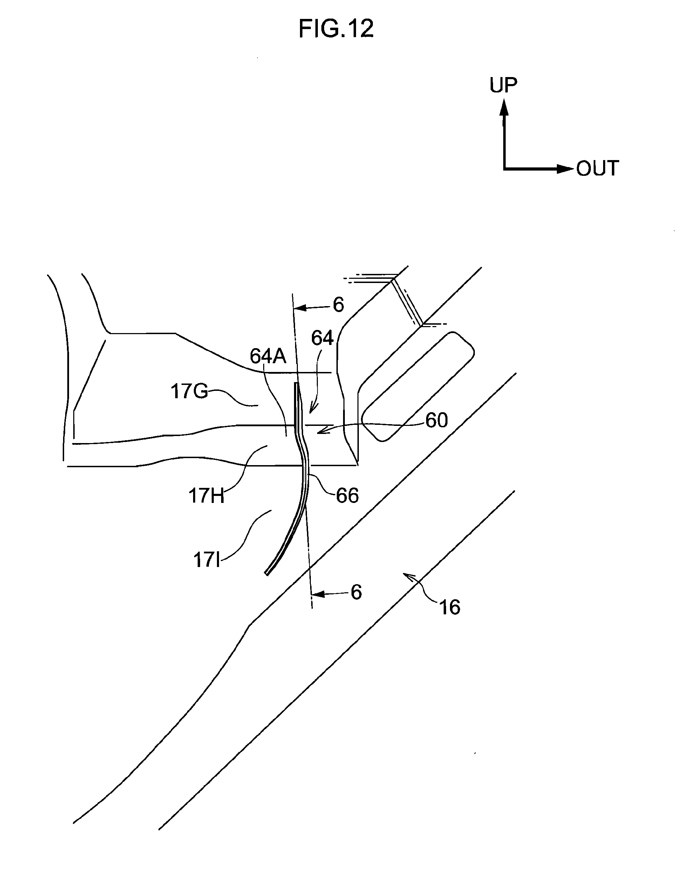

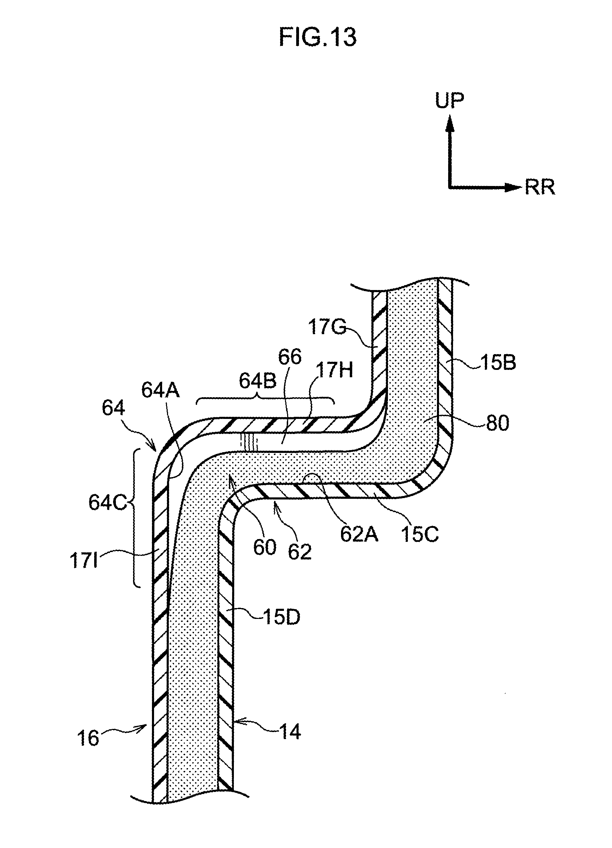

Fig. 12 to Fig. 14 show a join portion 60 between the lower outer 14 and the inner panel 16 at a vehicle width direction central portion lower portion side of the back door 10 (see Fig. 5). As shown in Fig. 5 and Fig. 12 to Fig. 14, bent portions 62, 64 are formed at the join portion 60 between the lower outer 14 and the inner panel 16 at the vehicle width direction central portion lower portion side of the back door 10 so as to bend in a crank shape towards the vehicle inside from vehicle outside (upper portion side) panel faces 15B, 17G of the lower outer 14 and the inner panel 16. More specifically, as viewed from the side of the vehicle, the bent portion 62 of the lower outer 14 includes a wall portion 15C that extends from the upper portion side panel face 15B towards the vehicle front side, and a panel face 15D that extends from a front end of the wall portion 15C towards the vehicle lower side. Namely, as viewed from the side of the vehicle, in the bent portion 62 of the lower outer 14, the wall portion 15C and the panel face 15D form a protrusion shaped face 62A that protrudes so as to be inflected in a protrusion shape towards the vehicle inside (vehicle front side) (see Fig. 13).

As viewed from the side of the vehicle, the bent portion 64 of the inner panel 16 includes a wall portion 17H that extends from an upper portion side panel face 17G towards the vehicle front side, and a bottom portion panel face 17I that extends from a front end of the wall portion 17H towards the vehicle lower side. Namely, as viewed from the side of the vehicle, in the bent portion 64 of the inner panel 16, the wall portion 17H and the panel face 17I form a recess shaped face (recess shaped portion) 64A serving as a corner portion (a bottom portion panel face 17I side corner portion) that is recessed so as to inflect in a recess shape towards the vehicle inside (vehicle front side). The recess shaped face 64A is formed in a shape conforming to the shape of the protrusion shaped face 62A.

A rib 66 that projects out in a substantially orthogonal direction from the recess shaped face 64A is formed at the recess shaped face 64A of the bent portion 64 to which the adhesive 80 is coated. The rib 66 is formed projecting out towards the vehicle outside from the recess shaped face 64A and running along the vehicle front-rear direction and the vehicle up-down direction spanning from the vicinity of the corner portion of the recess shaped face 64A to the wall portion 17H.

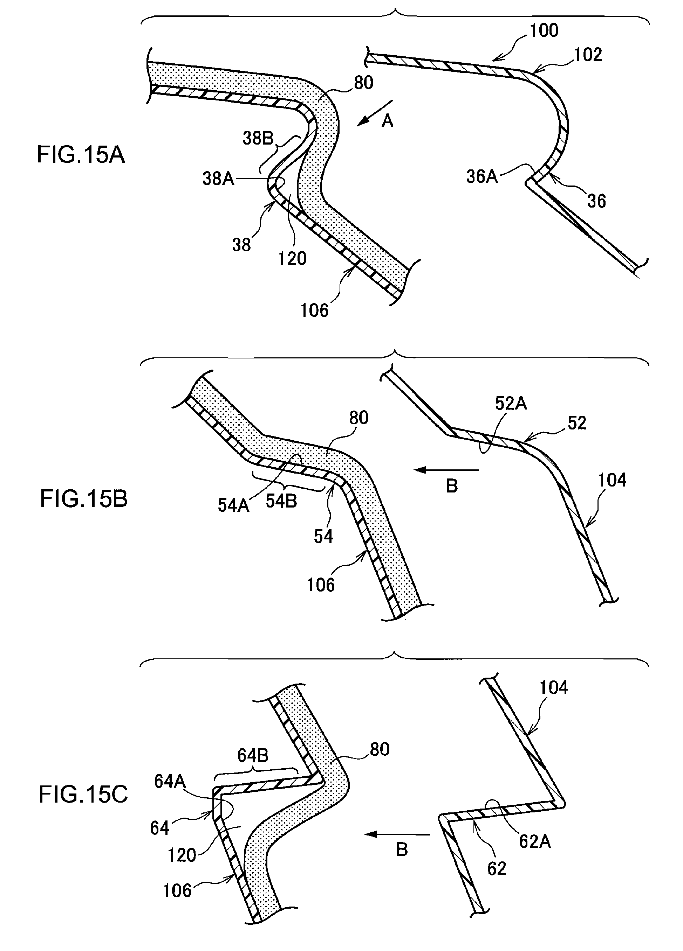

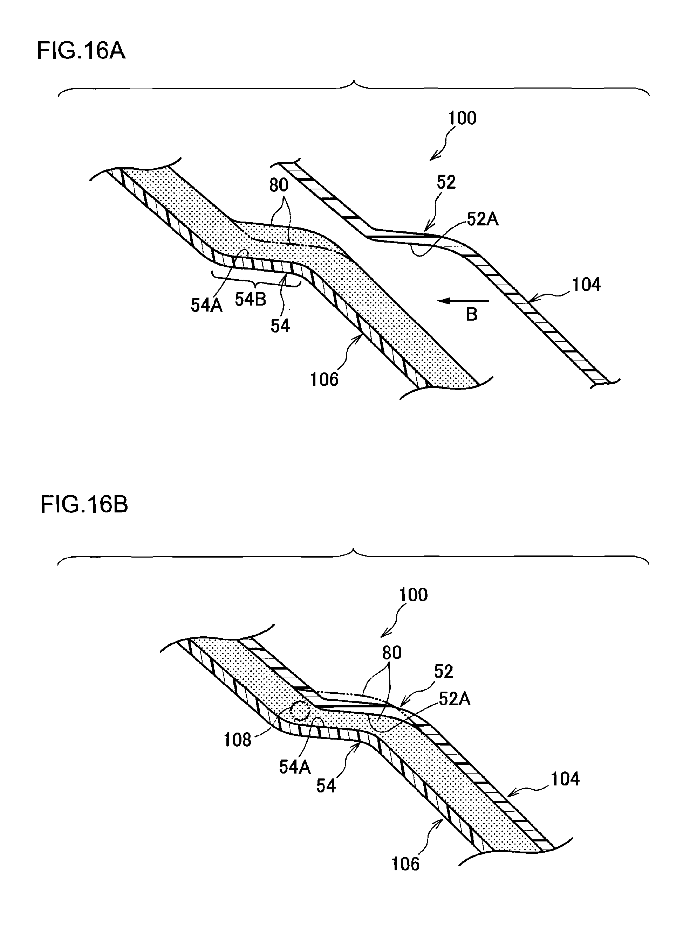

Before proceeding to explain the operation and advantageous effects of the back door 10 of the present exemplary embodiment, explanation first follows regarding a back door 100 applied with a resin back door structure of a comparative example, with reference to Fig. 15A to Fig. 15C and Fig. 16A and Fig. 16B.

Fig. 15A shows a location on the back door 100 of the comparative example corresponding to the join portion 30 between the upper outer and the inner panel at the vehicle width direction outside upper portion of the back door 10 shown in Fig. 8. Fig. 15B shows a location on the back door 100 of the comparative example corresponding to the join portion 50 between the lower outer and the inner panel at the vehicle up-down direction intermediate portion on the vehicle width direction outside of the back door 10 shown in Fig. 11. Fig. 15C shows a location corresponding to the join portion 60 between the lower outer and the inner panel in the vicinity of the vehicle width direction central portion of the back door 10 shown in Fig. 13.

As shown in Fig. 15A, at a location 38B where a recess shaped face 38A forms a small angle with respect to the setting direction of an outer panel 102 to an inner panel 106 indicated by arrow A, in other words at the location 38B of the recess shaped face 38A where orientation is close to parallel to the setting direction indicated by arrow A, there is a possibility of adhesive 80 coated on the inner panel 106 being scraped away when the outer panel 102 is set to the inner panel 106 along the setting trajectory.

Similarly, as shown in Fig. 15B and in Fig. 16A and Fig. 16B, at a location 54B where a recess shaped face 54A forms a small angle with respect to the setting direction of a lower outer 104 to the inner panel 106 indicated by arrow B, in other words at the location 54B of the recess shaped face 54A where orientation is close to parallel to the setting direction indicated by arrow B, there is a possibility of an upper portion side (to the upper side of the double-dotted dashed line in Fig. 16A and Fig. 16B) of the adhesive 80 coated on the inner panel 106 being scraped away during a process to set the lower outer 104 to the inner panel 106. There is accordingly the possibility of an unstable coating state of the adhesive 80.

As shown in Fig. 16B, the scraped away adhesive 80 is collected in the vicinity of an inside region 108 of the recess shaped face 54A between the lower outer 104 and the inner panel 106. The adhesive 80 collected in the vicinity of the inside region 108 is squeezed out in a direction orthogonal to the coating line of the adhesive 80, namely in the lateral direction of the inside region 108 (in the width direction of the back door 100). There is accordingly a possibility of the adhesive 80 being squeezed out to the outsides of outer peripheral portions of the back door 100 when joint portions (seal lines) joined by the adhesive 80 are at outer peripheral portions of the back door 100. The same issue of the adhesive 80 being squeezed out occurs regardless of whether the adhesive 80 is coated on the inner panel or the outer panel.

As shown in Fig. 15C, there is also the possibility of the adhesive 80 being scraped away when the lower outer 104 is being set to the inner panel 106 at a location 64B of a recess shaped face 64A where orientation is close to parallel to the setting direction of the lower outer 104 indicated by arrow B.

As shown in Fig. 15A, the path of an adhesive coating robot that coats the adhesive 80 may not be able to follow the recess shaped face 38A of the inner panel 106, with the coated adhesive 80 lifting off at a corner portion of the recess shaped face 38A. Namely, adhesive lift-off 120 may occur. The bottom face (far side face) of the lifted-off adhesive 80 is pressed against the inner panel 106 when the outer panel 102 is set, however there is a possibility of seal breaks resulting for example from insufficient filling of the adhesive 80 when there is air bubble ingress, when the adhesive 80 begins to cure, or when an uneven shape of the adhesive 80 at the point of extrusion from the nozzle of the adhesive coating robot remains.

Changes to the position of the adhesive 80 when the adhesive 80 is scraped away are another cause of seal breaks. Namely, sometimes the adhesive 80 is not evenly filled due to being pulled out of place when the adhesive 80 is scraped away.

Similarly, as shown in Fig. 15C, seal breaks in a join portion may be caused by adhesive lift-off 120 where the coated adhesive 80 has lifted off at a corner portion of the recess shaped face 64A of the inner panel 106.

By contrast, as shown in Fig. 7 and Fig. 8, in the back door 10 of the present exemplary embodiment, the rib 40 is formed at the recess shaped face 38A of the bent portion 38 of the inner panel 16 so as to project out in a substantially orthogonal direction from the recess shaped face 38A and run substantially along the vehicle up-down direction. In other words, the rib 40 is formed to the bent portion 38 of the inner panel 16 at a location 38B (at the back face of the wall portion 17B) where the recess shaped face 38A of the inner panel 16 forms a small angle with respect to the setting direction of the upper outer 12 indicated by arrow A, and to a location 38C (in the vicinity of the bottom portion panel face 17C side corner portion) where adhesive lift-off is prone to occur (see Fig. 8). Accordingly, the leading end of the rib 40 bites into (indents) the adhesive 80 in a set state of the upper outer 12 to the inner panel 16, even when the adhesive 80 lifts off at the corner portion of the recess shaped face 38A, and/or if the adhesive 80 is scraped away when setting the upper outer 12 in the arrow A direction. As shown in Fig. 7 and Fig. 8, the inner panel 16 and the upper outer 12 can accordingly be more reliably sealed together, with the leading end of the rib 40 acting as a seal line.

As shown in Fig. 11, the rib 56 is formed to the bent portion 54 of the inner panel 16 at a location 54B (the upper face of the wall portion 17E) where the recess shaped face 54A of the inner panel 16 forms a small angle with respect to the setting direction of the lower outer 14 indicated by arrow B. As shown in Fig. 10 and Fig. 11, when setting the lower outer 14 in the arrow B direction, the leading end of the rib 56 accordingly bites into the adhesive 80 in a set state of the lower outer 14 to the inner panel 16 even when some of the adhesive 80 is scraped away.

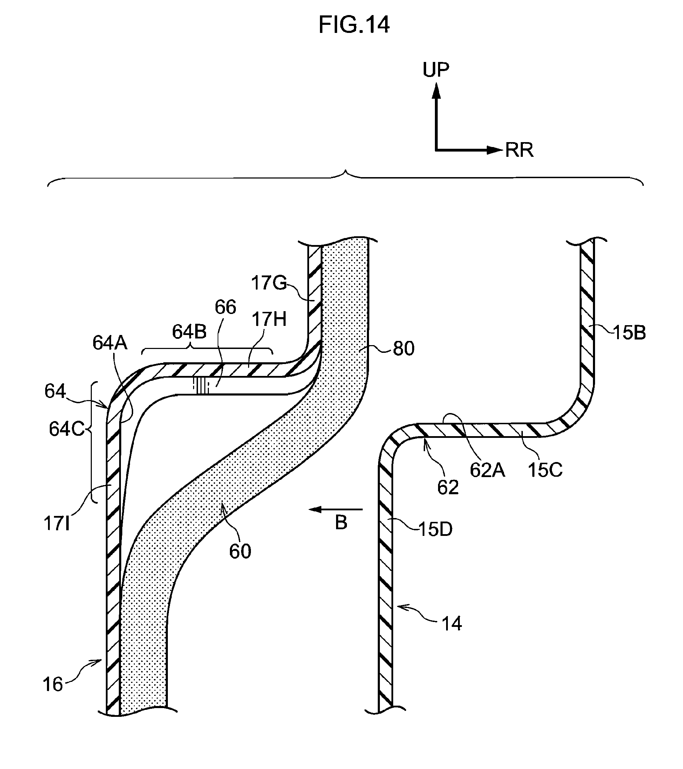

Similarly, as shown in Fig. 13 and Fig. 14, the rib 66 is formed to the bent portion 64 of the inner panel 16 at a location 64B (at the lower face of the wall portion 17H) where the recess shaped face 64A of the inner panel 16 forms a small angle with respect to the setting direction of the lower outer 14 indicated by the arrow B, and at a location 64C (in the vicinity of the bottom portion panel face 17I side corner portion) where adhesive lift-off is liable to occur. The leading end of the rib 66 accordingly bites into (indents) the adhesive 80 in a set state of the lower outer 14 to the inner panel 16 even when the adhesive 80 lifts off at the recess shaped face 64A and/or when some of the adhesive 80 is scraped away when setting the lower outer 14 in the arrow B direction. The inner panel 16 and the lower outer 14 can accordingly be more reliably sealed together with the leading ends of the ribs 56, 66 acting as seal lines.

As shown in Fig. 7, in the back door 10 of the present exemplary embodiment, the separation (distance between faces) L between the recess shaped face 38A of the inner panel 16 and the protrusion shaped face 36A of the upper outer 12 is configured so as to gradually widen on progression from the vehicle width direction outside towards the vehicle width direction inside. When setting the upper outer 12 to the inner panel 16, the adhesive 80 can accordingly be suppressed from being scraped away and squeezed out at vehicle width direction outside outer peripheral portions of the back door 10 at portions on the bottom portion panel face 17C side of the recess shaped face 3 8A where the adhesive 80 readily collects.

As shown in Fig. 10, the separation (distance between faces) L between the recess shaped face 54A of the inner panel 16 and the protruding face 52A of the lower outer 14 is configured wider than the separation between general join portions (join portions other than the bent portions 52, 54). When setting the lower outer 14 to the inner panel 16, the adhesive 80 can accordingly be suppressed from being scraped away and squeezed out at vehicle width direction outside outer peripheral portions of the back door 10 at portions on the bottom portion panel face 17F side of the recess shaped face 54A where the adhesive 80 readily collects.

However, in the back door 100 of the comparative example, there is the possibility of seal breaks occurring at join portions of the bent portions of the inner panel 106, and the possibility of the adhesive 80 being squeezed out at vehicle width direction outside outer peripheral portions of the back door 100. An increase in cost is incurred if, in order to avoid such occurrences, as a countermeasure to seal breaks for example a sealing material such as EPT sealer (a sealing material with a main component of a rubber foam) is applied. Moreover, adopting a structure wherein for example angles are provided to the faces of the bent portions of the inner panel 106 limits the degrees of freedom for design.

By contrast, in the back door 10 of the present exemplary embodiment, since the occurrence of seal breaks when joining the upper outer 12 and the lower outer 14 to the bent portions 38, 54, 64 of the inner panel 16 can be suppressed by the ribs 40, 56, 66, the addition of a stick-on member such as an EPT sealer (a sealing material with a main component of a rubber foam) or the coating of additional adhesives such as polyurethane are no longer required as countermeasures to seal break. Moreover, treatment to remove adhesive that has been squeezed out at vehicle width direction outside outer peripheral portions of the back door 10 is no longer required, and unstable procedures, such as locally reducing the amount of adhesive, can be eliminated. Such issues frequently impose design limitations, namely introducing angles to the faces of the bent portions of the inner panel 16, however the present invention can obtain high degrees of freedom for design.

Note that in the above exemplary embodiment, the ribs are provided in the vicinity of the corner portions on the bottom portion panel face sides of the bent portions of the inner panel 16 to which the adhesive is coated. However in cases where the adhesive coats the upper outer and the lower outer, the ribs are preferably provided in the vicinity of corner portions on the bottom portion panel face sides of the bent portions of the upper outer and the lower outer. When the join portions of the upper outer and the lower outer are joined with adhesive to the join portions of the inner panel 16, the occurrence of seal breaks due to insufficient filling of the adhesive in the vicinity of the corner portions of the bent portions of the upper outer and the lower outer can accordingly be suppressed.

In the present exemplary embodiment, the outer panel is configured from the two divided members of the upper outer 12 and the lower outer 14. However the outer panel may be configured from a single integrated outer panel, with an opening portion for attachment of the rear window glass formed at an upper portion side of the outer panel.

In the present exemplary embodiment, the back door 10 is employed in which the upper outer and the lower outer serve as the outer panel and the inner panel 16 are all formed from resin. However there is no limitation thereto, and configuration may be made with only the inner panel 16 being made from resin.

In the present exemplary embodiment, the present invention is applied to a resin back door structure, however there is no limitation to a back door, and the present invention may be applied to any appropriate resin door structure in which an outer panel and a resin inner panel are joined by an adhesive.

## Claims

1. A resin vehicle door structure comprising:
an outer panel (12) to be disposed at a vehicle compartment outer side of a vehicle door;
an inner panel (16) made from resin and to be disposed at a vehicle compartment inner side of the outer panel (12);
the resin vehicle door structure being **characterized by**
a bent portion (36, 38; 52, 54) that is a portion of the resin vehicle door structure which is formed by the outer panel (12) and the inner panel (16) and that is provided at a join portion (30; 50) where the outer panel (12) and the inner panel (16) are joined to each other by an adhesive (80), whereby the outer panel (12) and the inner panel (16) are bent into a crank shape when forming the bent portion (36, 38; 52, 54); and
a rib (40; 56) that is formed at least at a corner portion of the bent portion (36, 38; 52, 54) on a face of one of the outer panel (12) and the inner panel (16) that is coated with the adhesive (80), and that projects out from said face of the corner portion.

2. The resin vehicle door structure of claim 1 wherein at least a portion of the rib (40; 56) is formed at a face of the bent portion (36, 38; 52, 54), the bent portion (36, 38; 52, 54) being disposed along a direction in which the portion of the outer panel (12) and the portion of the inner panel (16), which form the joint portion (30; 50), are relatively pressed against each other.

3. The resin vehicle door structure of either claim 1 or claim 2 wherein:
the adhesive (80) coats a portion of the inner panel (16) at the bent portion (36, 38; 52, 54); and
the corner portion on the face of one of the outer panel (12) and the inner panel (16) that is coated with the adhesive (80) configures a recess shaped portion where the inner panel (16) is recessed towards the vehicle compartment inner side when mounted to the vehicle.

## Patentansprüche

1. Fahrzeugtür-Harzstruktur, aufweisend:
ein Außenpaneel (12), das sich an einer Fahrgastzellen-Außenseite einer Fahrzeugtür befindet;
ein Innenpaneel (16), das aus Harz besteht und sich an einer Fahrgastzellen-Innenseite des Außenpaneels (12) befindet;
wobei die Fahrzeugtür-Harzstruktur **dadurch gekennzeichnet ist, dass** sie Folgendes aufweist:
einen gebogenen Abschnitt (36, 38; 52, 54), bei dem es sich um einen Abschnitt der Fahrzeugtür-Harzstruktur handelt, der durch das Außenpaneel (12) und das Innenpaneel (16) gebildet wird, und der sich an einem Verbindungsabschnitt (30; 50) befindet, wo das Außenpaneel (12) und das Innenpaneel (16) durch einen Klebstoff (80) miteinander verbunden werden, wobei das Außenpaneel (12) und das Innenpaneel (16) in eine Kurbelform gebogen werden, wenn der gebogene Abschnitt (36, 38; 52, 54) ausgebildet wird; und
eine Rippe (40; 56), die zumindest an einem Eckabschnitt des gebogenen Abschnitts (36, 38; 52, 54) auf einer Fläche von einem von dem Außenpaneel (12) und dem Innenpaneel (16), das mit dem Klebstoff (80) beschichtet ist, ausgebildet ist, und die aus der Fläche des Eckabschnitts herausragt.

2. Fahrzeugtür-Harzstruktur nach Anspruch 1, wobei zumindest ein Abschnitt der Rippe (40; 56) an einer Fläche des gebogenen Abschnitts (36, 38; 52, 54) ausgebildet ist, wobei sich der gebogene Abschnitt (36, 38; 52, 54) entlang einer Richtung befindet, in der der Abschnitt des Außenpaneels (12) und der Abschnitt des Innenpaneels (16), die den Verbindungsabschnitt (30; 50) bilden, zusammengepresst sind.

3. Fahrzeugtür-Harzstruktur nach einem von Anspruch 1 oder 2, wobei:
ein Abschnitt des Innenpaneels (16) an dem gebogenen Abschnitt (36, 38; 52, 54) mit dem Klebstoff (80) beschichtet ist; und
der Eckabschnitt auf der Fläche von einem von dem Außenpaneel (12) und dem Innenpaneel (16), das mit dem Kleber (80) beschichtet ist, einen vertiefungsförmigen Abschnitt konfiguriert, an dem das Innenpaneel (16) in Richtung der Fahrgastzellen-Innenseite vertieft ist, wenn es an dem Fahrzeug befestigt ist.

## Revendications

1. Structure de porte de véhicule en résine comprenant :
un panneau extérieur (12) destiné à être disposé au niveau d'un côté extérieur de compartiment de véhicule d'une carrosserie de véhicule ;
un panneau intérieur (16) fait de résine et destiné à être disposé au niveau d'un côté intérieur de compartiment de véhicule du panneau extérieur (12) ;
la structure de porte de véhicule en résine étant **caractérisée par**
une partie courbée (36, 38; 52, 54) qui est une partie de la structure de porte de véhicule en résine qui est formée par le panneau extérieur (12) et le panneau intérieur (16) et qui est placé en une partie de jonction (30; 50) où le panneau extérieur (12) et le panneau intérieur (16) sont joints ensemble par un adhésif (80), moyennant quoi le panneau extérieur (12) et le panneau intérieur (16) sont courbés en une forme de manivelle lors de la formation de la partie courbée (36, 38; 52, 54) ; et
une nervure (40; 56) qui est formée au moins au niveau d'une partie de coin de la partie courbée (36, 38; 52, 54) sur une face de l'un du panneau extérieur (12) et du panneau intérieur (16) qui est recouverte avec l'adhésif (80), et qui fait saillie vers l'extérieur de ladite face de la partie de coin.

2. Structure de porte de véhicule en résine selon la revendication 1 dans laquelle au moins une partie de la nervure (40; 56) est formée au niveau d'une face de la partie courbée (36, 38; 52, 54), la partie courbée (36, 38; 52, 54) étant disposée le long d'une direction dans laquelle la partie du panneau extérieur (12) et la partie du panneau intérieur (16), qui forment la partie de jonction (30; 50), sont relativement pressées l'une contre l'autre.

3. Structure de porte de véhicule en résine selon la revendication 1 ou la revendication 2 dans laquelle :
l'adhésif (80) revêt une partie du panneau intérieur (16) au niveau de la partie courbée (36, 38; 52, 54) ; et
la partie de coin sur la face de l'un du panneau extérieur (12) et du panneau intérieur (16) qui est revêtue avec l'adhésif (80) configure une partie en forme de retrait où le panneau intérieur (16) est en retrait vers le côté intérieur de compartiment de véhicule quand il est monté sur le véhicule.
